(19) Europäisches Patentamt
European Patent Office
Office européen des brevets

(11) **EP 1 477 315 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
***B41F 33/00*** *(2006.01)*     ***G01L 5/00*** *(2006.01)*

(21) Anmeldenummer: **04101705.4**

(22) Anmeldetag: **23.04.2004**

(54) **Rotationskörper einer Druckmaschine mit einem Sensor**

Rotative body of a printing machine comprising a sensor

Corps rotatif d'une machine à imprimer comportant un détecteur

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.05.2003 DE 10321360**

(43) Veröffentlichungstag der Anmeldung:
**17.11.2004 Patentblatt 2004/47**

(73) Patentinhaber: **Koenig & Bauer Aktiengesellschaft 97080 Würzburg (DE)**

(72) Erfinder: **Keller, Bernd 97209 Veitshöchheim (DE)**

(56) Entgegenhaltungen:
**WO-A-03/031089     US-A- 4 676 094 US-A- 5 703 574**

**Beschreibung**

Die Erfindung betrifft einen Rotationskörper einer Druckmaschine mit einem Sensor gemäß den Merkmalen des Anspruches 1.

Durch die DE 199 30 600 A1 ist es bekannt, den Liniendruck zwischen zwei aneinander angestellter Walzen durch einen Drucksensor zu ermitteln, welcher beispielsweise entweder unmittelbar an der Oberfläche der Walze oder an der Außenfläche der Walze unter dem Aufzug angeordnet, oder aber in den Walzenmantel eingebettet ist.

Die DD 233 653 A1 offenbart eine Anordnung und ein Verfahren zur Messung von Zustellkräften zwischen Zylindern, wobei ein als Elektretfolie ausgeführter folienförmiger, polymerer Sensor unter dem Aufzug eines Aufzuges angeordnet ist. Dessen Signale werden einer Anzeige- und Registriervorrichtung zugeführt.

Die DE 20 54 505 B2 offenbart eine Vorrichtung zur Messung der Härte einer Probe, ein Messrad an eine rotierende Probe anstellbar ist, welches in Aussparungen am Umfang unter Kontaktknöpfen angeordnete Sensoren aufweist.

Die WO 03/031089 A betrifft eine Sensoranordnung in einer Messwalze zur Messung der Bahnspannung eines die Messwalze umschlingenden Metallbandes. Dort sollen auf eine Abdeckung der Sensoranordnung wirkende Kräfte konzentriert in ein Kraftübertragungselement und von diesem auf einen Sensor übertragen werden.

Der Erfindung liegt die Aufgabe zugrunde, einen Rotationskörper einer Druckmaschine mit einem Sensor zu schaffen.

Die Aufgabe wird erfindungsgemäß durch die Merkmale des Anspruches 1 gelöst.

Die mit der Erfindung erzielbaren Vorteile bestehen insbesondere darin, dass reproduzierbare und eindeutige Meßergebnisse geschaffen werden.

Von besonderem Vorteil ist die Ausbildung einer Länge des Sensors in Umfangsrichtung, welche zumindest ein viertel einer Periodenlänge der Grundresonanz des Bauteils entspricht. So kann im Betrieb mittels dem sich durch die Hauptschwingungsebene drehenden Sensor in einfacher und sicherer Weise die Schwingung charakterisiert werden. Der Sensor ist - z. B. flächenhaft (z. B. als Streifen) - in Umfangsrichtung auf einer signifikanten Abschnittslänge ortsauflösend.

Durch die formstabile Anordnung auf einem dimensionsstabilen Träger wird eine Belastung des Sensors in Umfangsrichtung, d. h. ein Walken vermieden. Der Sensor erfährt lediglich Belastungen in radialer Richtung des Zylinders und liefert infolge dessen bezüglich eines radialen Anstelldruckes unverfälschte Ergebnisse.

Durch die Anordnung eines Trägers in einer korrespondierenden Aussparung ist eine immer gleiche und reproduzierbare räumliche Anordnung auf dem Zylinder bzw. auf verschiedenen Zylindern gewährleistet. Somit sind erhaltene Meßwerte in der gleichen Weise skalierbar und einer einheitlichen Weiterverarbeitung zugänglich.

Die Anordnung schützt darüber hinaus den Sensor vor Beschädigung und/oder Verschmutzung.

Ausführungsbeispiele der Erfindung sind in den Zeichnungen dargestellt und werden im folgenden näher beschrieben.

Es zeigen:

Fig. 1    ein zusammen wirkendes Walzenpaar;

Fig. 2    eine Ausnehmung mit Träger und Sensor im Schnitt;

Fig. 3    eine Draufsicht auf die Anordnung nach Fig. 2;

Fig. 4    zwei Ausführungsformen a) und b) eines Kanals;

Fig. 5    einen viertel Schnitt gemäß Fig. 4 ohne Träger;

Fig. 6    einen viertel Schnitt gemäß Fig. 4 mit Träger;

Eine Druckmaschine, z. B. eine Rotationsdruckmaschine, weist mindestens zwei Rotationskörper 01; 02, z. B. Zylinder 01; 02 oder Walzen 01; 02, auf, welche miteinander in einer Anstellage im Bereich einer jeweiligen wirksamen Außenfläche 03; 04 aneinander angestellt sind und eine Nippstelle 06 bilden.

In Anstellage sind die Rotationskörper 01; 02 mit einem definierten Druck bzw. einer definierten Kraft aneinander anzustellen um eine störungsfreie Funktion, z. B. einen gewünschten und gleichmäßigen Farbübertrag, zu gewährleisten. Die Anstellung mit der definierten Kraft muß zum einen während des Anstellens entsprechend vorgenommen werden und zum anderen während des Betriebs stabil bleiben.

Veränderungen in der Kraft während des Betriebes können von sich langsam verändernden Bedingungen (Abnutzung, thermische Einflüsse etc.) aber auch von Schwingungen einer oder beider Walzen 01; 02 herrühren.

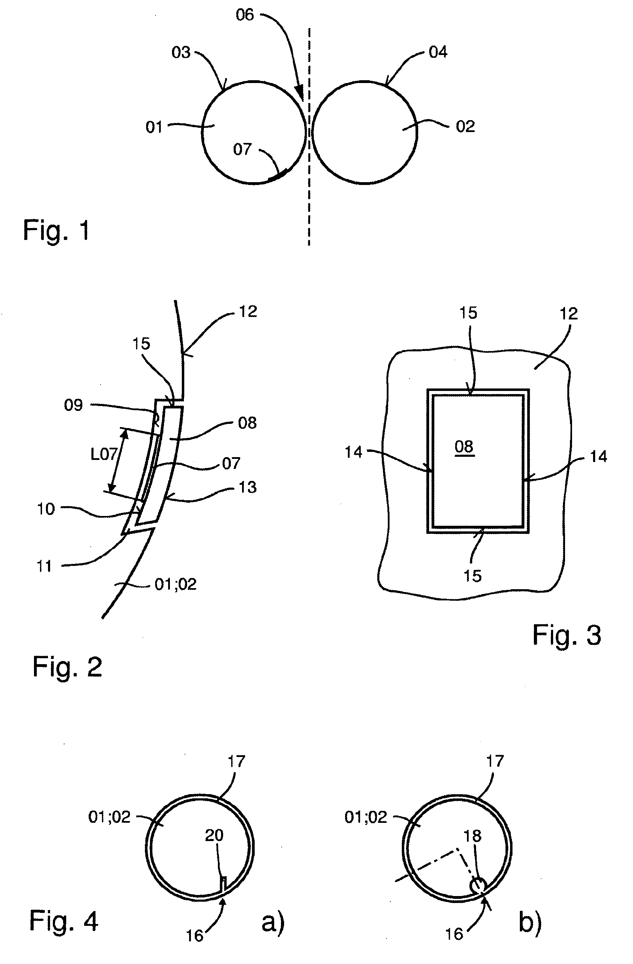

Zumindest eine der Walzen 01; 02 weist wenigstens einen drucksensitiven Sensor 07 auf, durch welchen beim Anstellen die Kraft (bzw. der Druck oder eine äquivalente Größe) und/oder während des Betriebes die langwelligen oder kurzwelligen Veränderungen in der Kraft in radialer Richtung ermittelbar sind (Fig. 1).

Wie in der Fig. 2 dargestellt ist der Sensor 07 zwischen einer Unterseite 10 eines Trägers 08 und einem Boden 09 einer Ausnehmung 11 auf einer Mantelfläche 12 der Walze 01; 02 (bzw. deren Grundkörpers) angeordnet. In vorteilhafter Ausführung ist der Sensor 07 mit dem Träger 08, z. B. durch Stoffschluß, verbunden. Die Ausnehmung 11 und der Träger 08 weisen, zumindest im Bereich der Mantelfläche 12 korrespondierende, formkomplementäre Abmessungen (ggf. zuzüglich einer Zugabe für die Montage) auf. Die Walze 01; 02 weist in axialer Richtung zumindest eine derart ausgebildete Ausnehmung 11, vorzugsweise im Bereich einer halben Länge der Walze 01; 02, auf. Eine Außenfläche 13 des Trägers 08 ist in der Weise gestaltet, dass diese die ansonsten kreisförmige (in Umfangsrichtung) bzw. zylindrische (auf der Mantelfläche) Kontur der Mantelfläche 12 fortsetzt bzw. vervollständigt. Seitenflächen 14 des Trägers 08 und zumindest eine Stirnfläche 15 (in Fig. 3 beide Stirnflächen 15) schließen auf Höhe der benachbarten Mantelfläche 12 bündig mit den korrespondierenden Wandungen der Ausnehmung 11 ab (Fig. 3).

Es können jedoch auch mehrere Ausnehmungen 11 mit entsprechenden Trägern 08 bzw. Sensoren 07 in axialer Richtung nebeneinander auf der Mantelfläche 12 angeordnet sein. Auch in Umfangsrichtung können mehrere Ausnehmungen 11 mit entsprechenden Trägern 08 bzw. Sensoren 07 hintereinander angeordnet sein.

Der Träger 08 kann in der Ausnehmung 11 auf unterschiedliche Weise form-, reib, und/oder stoffschlüssig befestigt sein:

So können der Fliehkraft entgegen wirkende Formschrägen an zwei gegenüberliegenden Enden so ausgebildet sein, dass zum Lösen zunächst eine Bewegung in Umfangsrichtung erforderlich ist und sich durch die Reibung eine selbstblockierende Wirkung einstellt. Auch kann durch Kleben, z. B. mit Polymeren verschiedener Art, an einer Unterfläche des Trägers 08, an ggf. vorhandene Formschrägen und/oder an Stoßflächen eine Verbindung hergestellt werden. Eine formschlüssige, lösbare Verbindung ist zusätzlich oder alternativ beispielsweise durch Formschrauben erreichbar. Ebenfalls lösbar ist der Träger 08 in der Ausnehmung 11 beispielsweise durch selbstarretierende Systeme (Schnäpper) verbindbar, wobei stirnseitig zum Träger 08 in einer Wand der Ausnehmung 11 ein federndes Element z. B. in Kugelform oder nach dem Prinzip von Nut und Feder angeordnet ist.

In besonders vorteilhafter Ausführung ist die Anordnung der Ausnehmung 11 und des Trägers 08 in der genannten Weise an Walzen 01; 02 angeordnet, welche in Umfangsrichtung gesehen mindestens eine ins Innere der Walze 01; 02 reichende, axial verlaufende Öffnung 16 zur Aufnahme eines oder mehrerer Enden eines oder mehrerer Aufzüge 17 aufweisen. Die Walze 01; 02 kann als ein eine Druckform 17 tragender Formzylinder 01; 02 oder ein Gummituch 17, insbesondere Metalldrucktuch 17, tragender Übertragungszylinder 01; 02 ausgeführt sein. Die Öffnung 16 ist im Bereich der Mantelfläche 12 in Umfangsrichtung z. B. schmal und schlitzförmig (≤ 3 mm auf der Mantelfläche in Umfangsrichtung) ausgeführt. Sie kann sich weiter als schmaler, ein oder mehrere Aufzugenden 22 aufnehmender Schlitz 20 ins Innere des Druckwerkszylinders 01 erstrecken (Fig. 4a) oder sich ggf. im Inneren zu einem Kanal 18 aufweiten, welcher z. B. eine nicht dargestellte Spann- und/oder Klemmeinrichtung aufnimmt (Fig. 4 b).

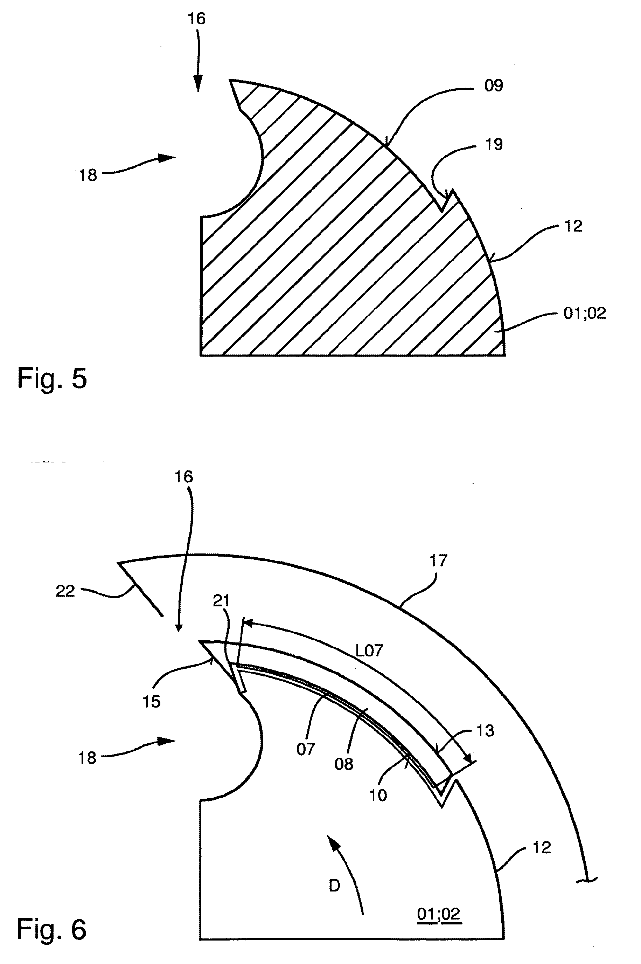

In Fig. 5 und 6 ist die Anordnung der Ausnehmung 11 bzw. des Trägers 08 an einer eine Öffnung 16 bzw. einen Kanal 18 aufweisenden Walze 01; 02 anhand eines in Fig. 4 angedeuteten viertel Schnittes dargestellt. Die Ausnehmung 11 ist in Umfangsrichtung lediglich auf einer Seite durch eine Stirnfläche 19 im Grundkörper der Walze 01; 02 begrenzt. Auf der gegenüberliegenden Seite mündet die Ausnehmung 11 in der Öffnung 16. Die Stirnfläche 19 weist eine gegenüber der radialen Richtung der Walze 01; 02 geneigte Formschräge auf, wobei sie zusammen mit dem Boden 09 einen spitzen Winkel bildet. Im der Öffnung 16 nahen Bereich ist die Ausnehmung 11 und der Träger 08 in der Weise geformt, dass in Umfangsrichtung entgegen einer Drehrichtung D ein Formschluß mit dem Träger 08 entsteht. Der Träger 08 weist hierzu z. B. einen Anschlag 21 in Form einer Nase 21 auf, welcher mit einem korrespondierenden Anschlag am Grundkörper der Walze 01; 02 zusammen wirkt. Zusätzlich weist der Träger 08 (und die Ausnehmung 11) eine Form in der Weise auf, dass im eingesetzten Zustand des Trägers 08 dieser die für das Einhängen eines Aufzugendes 22 erforderliche Form, z. B. als Einhängekante, vervollständigt (Fig. 6). In dieser Ausführung schließen die Seitenflächen 14 des Trägers 08 und lediglich eine Stirnfläche 15 auf Höhe der benachbarten Mantelfläche 12 bündig mit den korrespondierenden Wandungen der Ausnehmung 11 ab, während die andere Stirnfläche 15 die Einhängekante bzw. den Abschluß zur Öffnung 16 hin bildet.

Der Träger 08 ist vorzugsweise im Bereich eines vorlaufenden Aufzugendes 22 angeordnet, d. h. er durchläuft bei vorgegebenen Drehrichtung D direkt nach der Öffnung 16 die Nippstelle 06. Somit können durch die Überrollung der Öffnung 16 angeregte Schwingungen besonders gut (z. B. im Bereich hoher Amplituden) ermittelt werden.

Nicht dargestellte Elemente zur Weiterleitung des Signals, z. B. eine elektrische Leitung, kann in vorteilhafter Ausführung im Kanal 18 verlegt sein und dort bis an ein stirnseitiges Ende der Walze 01; 02 geführt werden. Von dort kann die Übertragung von Signalen z. B. über einen Schleifkontakt oder aber berührungslos über optische oder andere elektromagnetische Übertragungen erfolgen.

Die Signale können nun sowohl während des Anstellens zur Einstellung des gewünschten Anpressdruckes aber auch zur Erfassung von Schwingungen während des Betriebes genutzt werde. Hierfür werden die Signale einer entsprechenden Auswerteeinheit bzw. Regelung oder Steuerung zugeführt, in welcher im Fall von unzulässigen Drücken oder Schwingungsamplituden Gegenmaßnahmen eingeleitet werden können. Entsprechende Signale zur An- oder Abstellung bzw. zur Einleitung von Gegenschwingungen oder Impulsen können dafür vorgesehenen Stellmitteln, z. B. elektrischen, hydraulischen, magnetischen oder anders gearteten Aktuatoren, zugeführt werden. Diese Aktuatoren greifen dann beispielsweise an Lagern, an Zapfen oder am Ballen selbst an und nehmen Einfluß auf die Lage der Walze 01; 02 bzw. deren Lager oder die Biegelinie.

Die Anordnung und Ausgestaltung der Ausnehmung 11 und des Trägers 08 ist auf eine Kanalgeometrie gemäß eines Kanals 18 nach Fig. 4 a oder andere entsprechend anzuwenden.

Ein oder mehrere der Träger 08 mit Sensor 07 kann bzw. können an einem von zwei paarweise zusammen wirkenden Walzen 01; 02, oder jeweils an beiden Walzen 01; 02 angeordnet sein. Die beiden zusammen wirkenden Walzen 01; 02 können Formzylinder 01; 02 und Übertragungszylinder 01; 02, oder Formzylinder 01; 02 und mit diesem direkt zusammen wirkender Gegendruckzylinder 01; 02, oder Übertragungszylinder 01; 02 und mit diesem zusammen wirkender Gegendruckzylinder 01; 02 sein. Es können aber auch andere zusammen wirkende Walzen 01; 02 im Rahmen des Bahntransportes, eines Farbwerkes oder eines Feuchtwerkes sein.

Für alle genannten Ausführungen weist der Sensor 07 vorteilhaft in Umfangsrichtung des Rotationskörper 01; 02 betrachtet eine Länge L07 auf, welche mindestens einer viertel Wellenlänge einer Grundresonanzfrequenz für Eigenschwingungen (z. B. Biegeschwingung) des Rotationskörpers entspricht. Somit lässt sich auf dem Sensor 07 die Vollständige Information (Amplitude, Periodenlänge bzw. Frequenz) einerinsbesondere unerwünschten - Schwingung abbilden um ggf. geeignete Gegenmaßnahmen zu steuern bzw. zu regeln.

Die Länge L07 entspricht vorteilhaft zumindest einem n-tel, z. B. einem Viertel, vorteilhaft zumindest einer Hälfte, oder gar zumindest einem Ganzen eines x-fachen des Umfangs U. Der Faktor x ergibt sich hierbei aus dem Quotienten zwischen einer für die Maschine vorgesehenen maximalen Maschinendrehfrequenz $F_m$ in 1/s (Herz) mit der Grundresonanzfrequenz $f_r$ (in 1/s = Herz) für die charakteristische Biegeschwingung des rotierenden Bauteils 01, 02. D. h., es gilt:

$$L07 \geq \frac{1}{n} \times \frac{F_m}{f_r} \times U \qquad \text{mit } n = 1, 2 \text{ oder } 4$$

Beispielsweise ist bei einer Druckmaschine mit einer vorgesehenen Maschinendrehfrequenz $F_m$ von 25 Hz und einer typischen Grundresonanzfrequenz $f_r$ von 250 Hz der Faktor x gleich 1/10. Die Länge sollte nun z. B. mindestens ein vierzigstel, vorteilhaft ein zwanzigstel oder gar ein zehntel des Umfangs U des Zylinders betragen. Bei einem gängigen Maß von ca. 1.000 mm Umfang für einen doppelt großen Zylinder beträgt die Länge 07 z. B. zumindest 25mm, vorteilhaft mindestens 50 mm oder gar mindestens 100 mm. In einer anderen vorteilhaften Ausführung hinsichtlich einer Standardisierung und/oder einer Aufnahme mehrerer Schwingungsperioden ist die Länge L07 z. B. generell größer oder gleich 100 mm gewählt. Vorteilhaft ist die Ausführung des flächigen Sensors 07 in einteiliger, zusammenhängender Form. Ggf. ist es jedoch auch möglich, mehrere sensitive Abschnitte in direkter Abfolge in Umfangsrichtung hintereinander anzuordnen.

Da beim Abrollen des Zylinder 01; 02 auf dem zweiten nun der Sensor 07 durch die Nippstelle gedreht wird, und die Schwingungsebene der Biegeschwingung z. B. im wesentlichen mit der Verbindungsebene der beiden Zylinder 01, 02 zusammen fällt, wird nun zumindest eine viertel (bzw. halbe oder ganze) Welle auf dem Sensor 07 erfasst. Der Sensor 07 ist im Gegensatz zu im wesentlichen punktuell wirksamen Sensoren ortsauflösend bzw. flächenhaft im einer signifikanten, o. g. Längsausdehnung (Länge L07) ausgeführt.

Die Herstellung der Walze 01; 02 bzw. der Ausnehmung 11 erfolgt beispielsweise folgendermaßen: Nach Herstellung des Rohkörpers der Walze 01; 02 (ggf. bereits mit Öffnung 16 bzw. Kanal 18 versehen) wird auf der Mantelfläche 12 die mindestens eine Ausnehmung 11, beispielsweise durch Funkenerosion, eingearbeitet. Diese wird z. B. im Bereich der halben Länge der Walze 01; 02 mit den komplementären Maßen des Trägers 08 (ggf. zuzüglich Zugabe) so herausgearbeitet, dass der Träger 08 als Gegenstück passgenau eingesetzt werden kann. Die Fixierung des Trägers 08 erfolgt durch eine oder mehrere, teilweise ergänzende, teilweise optionale Maßnahmen wie oben aufgeführt. Eine elektrische Leitung zur Signalübertragung wird durch den Kanal 18 in einem nicht störenden Bereich geführt. Nach dem Einbau können ggf. zur Befestigung verwendete Schrauben abgesägt werden. Falls der Träger 08 wie in vorteilhafter Ausführung vor dem Einsetzten in radialer Richtung mit Übermaß ausgeführt wird, wird dieser entsprechend der kreisförmigen bzw. zylindrischen Umhüllenden der Walze 01; 02 anschließend überschliffen. Abweichend hiervon könnte der Träger 08 jedoch ggf. bereits vor dem Einbau in der Weise gefertigt sein, dass seine Außenfläche sich mit der Kontur der Mantelfläche deckt. Dies erfordert jedoch äußerst hohe Anforderungen an die Genauigkeiten bei der Fertigung.

Bezugszeichenliste

| | |
|---|---|
| 01 | Rotationskörper, Zylinder, Walze, Formzylinder, Übertragungszylinder, Gegendruckzylinder, Übertragungszylinder |
| 02 | Rotationskörper, Zylinder, Walze, Formzylinder, Übertragungszylinder, Gegendruckzylinder |
| 03 | wirksame Außenfläche |
| 04 | wirksame Außenfläche |
| 05 | - |
| 06 | Nippstelle |
| 07 | Sensor |
| 08 | Träger |
| 09 | Boden (11) |
| 10 | Unterseite (08) |
| 11 | Ausnehmung (01, 02) |
| 12 | Mantelfläche (01, 02) |
| 13 | Außenfläche (08) |
| 14 | Seitenfläche (08) |
| 15 | Stirnfläche (08) |
| 16 | Öffnung |
| 17 | Aufzug, Druckform, Gummituch, Metalldrucktuch |
| 18 | Kanal |
| 19 | Stirnfläche |
| 20 | Schlitz |
| 21 | Anschlag, Nase |
| 22 | Aufzugende (17) |

| | |
|---|---|
| D | Drehrichtung |
| L07 | Länge |

**Patentansprüche**

1. Rotationskörper einer Druckmaschine mit einem Sensor (07), wobei der Sensor (07) im Bereich einer Mantelfläche (12) des Rotationskörpers (01; 02) eingebettet ist, indem er in einer Ausnehmung (11) in der Mantelfläche (12) angeordnet und nach außen durch einen Träger (08) in der Weise abgedeckt ist, dass dessen Außenfläche (13) eine ansonsten zylindrische Kontur der Mantelfläche (12) im Bereich der Ausnehmung (11) vervollständigt, wobei der Sensor (07) zur Erfassung einer Schwingung beim Durchgang durch die Nippstelle mit einem zweiten Rotationskörper in Umfangsrichtung des ersten Rotationskörpers (01; 02) auf einer Abschnittslänge (L07) von mindestens 25 mm ortsauflösend ausgeführt ist.

2. Rotationskörper nach Anspruch 1, **dadurch gekennzeichnet, dass** der Träger (08) und die Ausnehmung (11) zumindest im Bereich ihrer Stoßflächen auf Höhe der Mantelfläche (12) im wesentlichen formkomplementäre Abmessungen aufweisen.

3. Rotationskörper nach Anspruch 1, **dadurch gekennzeichnet, dass** der Sensor (07) mit einer Unterseite (10) des Trägers (08) verbunden ist.

4. Rotationskörper nach Anspruch 1, **dadurch gekennzeichnet, dass** der Träger (08) mit einem Grundkörper des Rotationskörpers (01; 02) formschlüssig verbunden ist.

5. Rotationskörper nach Anspruch 1 oder 4, **dadurch gekennzeichnet, dass** der Formschluß zwischen Träger (08) und Rotationskörper (01; 02) in radialer Richtung auf korrespondierenden Formschrägen beruht, welche gegen die radiale Richtung des Rotationskörpers (01; 02) geneigt ausgeführt sind.

6. Rotationskörper nach Anspruch 1, **dadurch gekennzeichnet, dass** der Träger (08) mit einem Grundkörper des Rotationskörpers (01; 02) stoffschlüssig verbunden ist.

7. Rotationskörper nach Anspruch 1, **dadurch gekennzeichnet, dass** die Ausnehmung (11) in Umfangsrichtung direkt an eine axial auf der Mantelfläche (12) verlaufende Öffnung (16) zur Aufnahme eines oder mehrerer Aufzugenden (22) anschließt.

8. Rotationskörper nach Anspruch 7, **dadurch gekennzeichnet, dass** eine Stirnfläche (15) des Trägers (08) zusammen mit der Außenfläche (13) eine Einhängekante für ein vorlaufendes Aufzugende (22) bilden.

9. Rotationskörper nach Anspruch 7, **dadurch gekennzeichnet, dass** der Träger (08) im Bereich seines der Öffnung (16) nahen Endes mit einem entgegen einer Drehrichtung (D) wirksamen Anschlag (21) ausgebildet ist, welcher mit einem korrespondierenden Anschlag am Grundkörper der Walze (01; 02) zusammen wirkt.

10. Rotationskörper nach Anspruch 1, **dadurch gekennzeichnet, dass** der Sensor (07) in Umfangsrichtung des Rotationskörper (01; 02) betrachtet eine Länge (L07) aufweist, welche mindestens einer viertel Wellenlänge einer Grundresonanzfrequenz für Eigenschwingungen des Rotationskörpers entspricht, in dem gilt:

$$L07 \geq \frac{1}{n} \times \frac{F_m}{f_r} \times U$$

wobei n=4 beträgt, $F_m$ eine für die die Druckmaschine vorgesehene Maschinendrehfrequenz, $f_r$ die Grundresonanzfrequenz des Rotationskörpers und U dessen Umfang darstellt.

11. Rotationskörper nach Anspruch 10, **dadurch gekennzeichnet, dass** die Länge (L07) zumindest einem viertel eines x-fachen des Umfangs U entspricht, wobei x den Quotienten einer maximalen Maschinendrehfrequenz $F_m$ in 1/s mit der Grundresonanzfrequenz $f_r$ für eine Biegeschwingung des rotierenden Bauteils (01, 02) darstellt.

12. Rotationskörper nach Anspruch 11, **dadurch gekennzeichnet, dass** die Länge (L07) zumindest einer Hälfte eines x-fachen des Umfangs U entspricht.

13. Rotationskörper nach Anspruch 11, **dadurch gekennzeichnet, dass** die Länge (L07) zumindest einem x-fachen des Umfangs U entspricht.

14. Rotationskörper nach Anspruch 12, **dadurch gekennzeichnet, dass** die Länge (L07) zumindest einem zwanzigstel eines Umfangs des Rotationskörpers (01; 02) entspricht.

15. Rotationskörper nach Anspruch 1, **dadurch gekennzeichnet, dass** der Sensor (07) als drucksensitiver Sensor (07) zur Messung eines Anstelldruckes auf die Mantelfläche des Rotationskörpers (01; 02) beim Abrollen mit einem zweiten Rotationskörper ausgeführt ist.

16. Rotationskörper nach Anspruch 1, **dadurch gekennzeichnet, dass** der Sensor (07) als drucksensitiver Sensor (07) zur Messung eines Liniendruckes des Rotationskörpers (01; 02) beim Abrollen mit einem zweiten Rotationskörper ausgeführt ist.

17. Rotationskörper nach Anspruch 10, **dadurch gekennzeichnet, dass** die Länge (L07) zumindest 50 mm beträgt.

18. Rotationskörper nach Anspruch 1, **dadurch gekennzeichnet, dass** der Sensor (07) flächig in einteiliger, zusammenhängender Form ausgebildet ist.

19. Rotationskörper nach Anspruch 1, **dadurch gekennzeichnet, dass** der Sensor (07) flächig ausgebildet ist und mehrere sensitive Abschnitte in direkter Abfolge in Umfangsrichtung hintereinander angeordnet aufweist.

**Claims**

1. Rotational body of a printing press having a sensor (07), the sensor (07) being embedded in the region of a circumferential face (12) of the rotational body (01; 02) by being arranged in a recess (11) in the circumferential face (12) and being covered to the outside by a carrier (08) in such a way that its outer face (13) completes an otherwise cylindrical contour of the circumferential face (12) in the region of the recess (11), the sensor (07) being configured in a spatially resolving manner on a section length (L07) of at least 25 mm in the circumferential direction of the first rotational body (01; 02), in order to detect an oscillation during the passage through the nip point with a second rotational body.

2. Rotational body according to Claim 1, **characterized in that** the carrier (08) and the recess (11) have substantially complementary dimensions at least in the region of their abutting faces at the level of the circumferential face (12).

3. Rotational body according to Claim 1, **characterized in that** the sensor (07) is connected to an underside (10) of the carrier (08).

4. Rotational body according to Claim 1, **characterized in that** the carrier (08) is connected positively to a basic body of the rotational body (01; 02).

5. Rotational body according to Claim 1 or 4, **characterized in that** the positive connection between the carrier (08) and the rotational body (01; 02) in the radial direction is based on corresponding shaped inclines which are configured such that they are inclined against the radial direction of the rotational body (01; 02).

6. Rotational body according to Claim 1, **characterized in that** the carrier (08) is connected to a basic body of the rotational body (01; 02) with a material-to-material fit.

7. Rotational body according to Claim 1, **characterized in that**, in the circumferential direction, the recess (11) directly adjoins an opening (16) which extends axially on the circumferential face (12) for receiving one or more cover ends (22).

8. Rotational body according to Claim 7, **characterized in that**, together with the outer face (13), an end face (15) of the carrier (08) forms an attachment edge for a leading cover end (22).

9. Rotational body according to Claim 7, **characterized in that**, in the region of its end which is close to the opening (16), the carrier (08) is configured with a stop (21) which is active counter to a rotational direction (D) and interacts with a corresponding stop on the basic body of the roll (01; 02).

10. Rotational body according to Claim 1, **characterized in that**, as viewed in the circumferential direction of the rotational body (01; 02), the sensor (07) has a length (L07) which corresponds to at least one quarter of the wavelength of a fundamental resonant frequency for natural vibrations of the rotational body, in which:

$$L07 \geq \frac{1}{n} \times \frac{F_m}{f_r} \times U,$$

where n = 4, $F_m$ represents a machine rotational frequency which is provided for the printing press, $f_r$ represents the fundamental resonant frequency of the rotational body and U represents its circumference.

11. Rotational body according to Claim 10, **characterized in that** the length (L07) corresponds to at least one quarter of x times the circumference U, x representing the quotient of a maximum machine rotational frequency $F_m$ in 1/s with the fundamental resonant frequency $f_r$ for a bending vibration of the rotating component (01, 02).

12. Rotational body according to Claim 11, **characterized in that** the length (L07) corresponds to at least one half of x times the circumference U.

13. Rotational body according to Claim 11, **characterized in that** the length (L07) corresponds to at least x times the circumference U.

14. Rotational body according to Claim 12, **characterized in that** the length (L07) corresponds to at least one twentieth of a circumference of the rotational body (01; 02).

15. Rotational body according to Claim 1, **characterized in that** the sensor (07) is configured as a pressure-sensitive sensor (07) for measuring a thrown-on pressure on the circumferential face of the rotational body (01; 02) when rolling on a second rotational body.

16. Rotational body according to Claim 1, **characterized in that** the sensor (07) is configured as a pressure-sensitive sensor (07) for measuring a line pressure of the rotational body (01; 02) when rolling on a second rotational body.

17. Rotational body according to Claim 10, **characterized in that** the length (L07) is at least 50 mm.

18. Rotational body according to Claim 1, **characterized in that** the sensor (07) is configured flatly in a single-piece, contiguous form.

19. Rotational body according to Claim 1, **characterized in that** the sensor (07) is of flat configuration and has a plurality of sensitive sections arranged one behind another in a direct sequence in the circumferential direction.


**Revendications**

1. Corps rotatif d'une machine à imprimer, avec un capteur (07), le capteur (07) étant intégré dans la zone d'une surface d'enveloppe (12), du corps rotatif (01 ; 02), dans laquelle il est disposé dans un évidement (11) ménagé dans la surface d'enveloppe (12) et est couvert vers l'extérieur par un support (08), de manière que sa surface extérieure (13) complète un contour, au reste cylindrique, de la surface d'enveloppe (12) dans la zone de l'évidement (11), le capteur (07), prévu pour détecter une vibration lors du passage par la zone d'emprise avec un deuxième corps rotatif, étant réalisé avec une résolution locale d'au moins 25 mm sur une longueur de tronçon (L07), en direction périphérique du premier corps rotatif (01 ; 02).

2. Corps rotatif selon la revendication 1, **caractérisé en ce que** le support (08) et l'évidement (11) présentent des dimensions sensiblement à complémentarité de forme, au moins dans la zone de leurs surfaces de jointoiement à hauteur de la surface d'enveloppe (12).

3. Corps rotatif selon la revendication 1, **caractérisé en ce que** le capteur (07) est relié à une face inférieure (10) du support (08).

4. Corps rotatif selon la revendication 1, **caractérisé en ce que** le support (08) est relié, par une liaison à ajustement de forme, à un corps de base du corps rotatif (01 ; 02).

5. Corps rotatif selon la revendication 1 ou 4, **caractérisé en ce que** la liaison à ajustement de forme, entre support (08) et corps rotatif (01 ; 02) en direction radiale repose sur des pentes de forme correspondantes, inclinées par rapport la direction radiale du corps rotatif (01 ; 02).

6. Corps rotatif selon la revendication 1, **caractérisé en ce que** le support (08) est relié, par une liaison par la matière, à un corps de base du corps rotatif (01 ; 02).

7. Corps rotatif selon la revendication 1, **caractérisé en ce que**, en direction périphérique, l'évidement (11) se raccorde directement à une ouverture (16), s'étendant axialement sur la surface d'enveloppe (12), pour recevoir une ou plusieurs extrémités d'habillages (22).

8. Corps rotatif selon la revendication 7, **caractérisé en ce qu'**une face frontale (15) du support (08) forme, conjointement avec la surface extérieure (13), une arête d'accrochage pour une extrémité avant d'habillage (22).

9. Corps rotatif selon la revendication 7, **caractérisé en ce que** le support (08) est réalisé, dans la zone de son extrémité proche de l'ouverture (16), avec une butée (21), agissant à l'encontre d'un sens de rotation (D), coopérant avec une butée correspondant située sur le corps de base du rouleau (01 ; 02).

10. Corps rotatif selon la revendication 1, **caractérisé en ce que**, en observant dans la direction périphérique du corps rotatif (01 ; 02), le capteur (07) présente une longueur (L07) correspondant au moins à un quart de la longueur d'onde d'une fréquence de résonance fondamentale pour des vibrations en flexion du corps rotatif, dans laquelle on a :

$$L07 \geq \frac{1}{n}\,x\,\frac{F_m}{f_r}\,xU$$

sachant que n=4, $F_m$ est une fréquence de rotation de machine prévue pour la machine à imprimer, $f_r$ est la fréquence de résonance fondamentale du corps rotatif et U sa circonférence.

11. Corps rotatif selon la revendication 10, **caractérisé en ce que** la longueur (L07) correspond à au moins un quart d'un multiple par x de la circonférence U, x représentant le quotient d'une fréquence de rotation de machine maximale $F_m$, exprimée en 1/s, avec la fréquence de résonance fondamentale $f_r$ pour une vibration en flexion du composant rotatif (01, 02).

12. Corps rotatif selon la revendication 11, **caractérisé en ce que** la longueur (L07) correspond à au moins une moitié d'un multiple par x de la circonférence U.

13. Corps rotatif selon la revendication 11, **caractérisé en ce que** la longueur (L07) correspond à au moins un multiple par x de la circonférence U.

14. Corps rotatif selon la revendication 12, **caractérisé en ce que** la longueur (L07) correspond à au moins un vingtième d'une circonférence du composant rotatif (01, 02).

15. Corps rotatif selon la revendication 1, **caractérisé en ce que** le capteur (07) est réalisé sous forme de capteur sensible à la pression (07), pour la mesure d'une pression d'application sur la surface d'enveloppe du corps rotatif (01 ; 02) lors du roulement avec un deuxième corps rotatif.

16. Corps rotatif selon la revendication 1, **caractérisé en ce que** le capteur (07) est réalisé sous forme de capteur sensible à la pression (07), pour la mesure d'une pression linéaire du corps rotatif (01 ; 02) lors du roulement avec un deuxième corps rotatif.

17. Corps rotatif selon la revendication 10, **caractérisé en ce que** la longueur (L07) est au moins de 50 mm.

18. Corps rotatif selon la revendication 1, **caractérisé en ce que** le capteur (07) est de configuration plate et présente une forme unitaire, continue.

19. Corps rotatif selon la revendication 1, **caractérisé en ce que** le capteur (07) est de configuration plate et présente une pluralité de tronçons sensibles les uns derrière les autres, en succession directe en direction périphérique.

Fig. 1

Fig. 2

Fig. 3

Fig. 4

a)

b)

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19930600 A1
- DD 233653 A1
- DE 2054505 B2
- WO 03031089 A